# EUROPEAN PATENT APPLICATION

(11) **EP 4 811 605 A1**
(43) Date of publication of application: **23.09.2026**
(21) Application number: 26163597.3
(22) Date of filing: 10.03.2026
(51) Int. Cl.: H02J 50/50, H02J 50/12

(54) **WIRELESS POWER SUPPLY SYSTEM**

(30) Priority: 18.03.2025 TW 114109984
(71) Applicant: APh ePower Co., Ltd., Kaohsiung City 821 (TW)
(72) Inventor: SU, Hsiu-Hsien, 821 Kaohsiung City (TW); HUANG, Shang-Zeng, 821 Kaohsiung City (TW); LIN, Yu-Chi, 821 Kaohsiung City (TW); LEE, Tsung-Shiun, 821 Kaohsiung City (TW)
(74) Representative: Becker, Eberhard

(57) **Abstract**

A wireless power supply system (100, 200) is provided. The wireless power supply system (100, 200) includes a power coil circuit (110, 210), a relay coil circuit (120, 220_1, 220_2) and a receiving coil circuit (130, 230_1, 230_2). The power coil circuit (110, 210) receives a main power (PM) and sends the wireless power (WPM) according to the main power (PM). The relay coil circuit (120, 220_1, 220_2) receives the wireless power (WPM) and sends a relay power (PRL, PRL1, PRL2) according to the wireless power (WPM). The receiving coil circuit (130, 230_1, 230_2) receives the wireless power (WPM) and the relay power (PRL, PRL1, PRL2), and converts the wireless power (WPM) and the relay power (PRL, PRL1, PRL2) into a receiving power (PS, PS1, PS2).

## Description

### BACKGROUND

### Technical Field

The disclosure relates to a power supply system, and more particularly, to a wireless power supply system.

### Description of Related Art

Current wireless power supply systems may utilize wireless power supply methods to transmit power. A wireless power supply system may use a power coil to send a wireless power to a receiving coil. A load receives the power at the receiving coil to operate or charge. However, when the power coil is not precisely aligned with the receiving coil, the transmission efficiency of the wireless power supply of the wireless power supply system may decrease.

Thus, when the power coil is not precisely aligned with the receiving coil, how to increase the transmission efficiency of the wireless power supply of the wireless power supply system is one of the research focuses of those skilled in the art.

### SUMMARY

A wireless power supply system is provided. When the power coil is not precisely aligned with the receiving coil, the transmission efficiency of the wireless power supply of the wireless power supply system of the disclosure may be increased.

The wireless power supply system of the disclosure includes a power coil circuit, a relay coil circuit, and a receiving coil circuit. The power coil circuit receives a main power and sends the wireless power according to the main power. The relay coil circuit receives the wireless power and sends a relay power according to the wireless power. The receiving coil circuit receives the wireless power and the relay power and converts the wireless power and the relay power into a receiving power. The relay coil circuit includes a relay coil. The receiving coil circuit includes a receiving coil. The relay coil and the receiving coil are not parallel to each other and do not overlap.

Based on the above, the relay coil circuit receives the wireless power and sends a relay power according to the wireless power. The receiving coil circuit receives the wireless power and the relay power and converts the wireless power and the relay power into a receiving power. As such, when the power coil circuit is not precisely aligned with the receiving coil, the transmission efficiency of the wireless power supply of the wireless power supply system may be increased.

### BRIEF DESCRIPTION OF THE DRAWINGS

FIG. 1 is a schematic diagram illustrating a wireless power supply system according to an embodiment of the disclosure.
FIG. 2 is a schematic diagram illustrating a wireless power supply system according to an embodiment of the disclosure.
FIG. 3 is a circuit schematic diagram illustrating a power coil circuit according to an embodiment of the disclosure.
FIG. 4 is a circuit schematic diagram illustrating a relay coil circuit according to an embodiment of the disclosure.
FIG. 5 is a circuit schematic diagram illustrating a receiving coil circuit according to an embodiment of the disclosure.
FIG. 6 is a schematic diagram illustrating an application of a wireless power supply system according to an embodiment of the disclosure.
FIG. 7A and FIG. 7B are schematic diagrams respectively illustrating applications of a wireless power supply system according to an embodiment of the disclosure.
FIG. 8A and FIG. 8B are equivalent schematic diagrams respectively illustrating a wireless power supply system according to an embodiment of the disclosure.
FIG. 9A, FIG. 9B and FIG. 9C are schematic diagrams illustrating a receiving coil circuit and an output circuit according to an embodiment of the disclosure.

### DESCRIPTION OF THE EMBODIMENTS

Some embodiments of the disclosure will be described in detail below with reference to the accompanying drawings. The reference numerals cited in the following description, when the same reference numerals appear in different drawings, will be regarded as the same or similar elements. These examples are only a portion of the disclosure and do not disclose all possible embodiments of the disclosure. More precisely, these embodiments are only examples within the scope of the patent application of the disclosure.

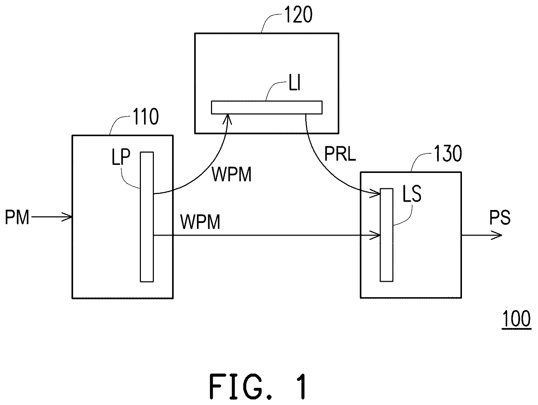

Refer to FIG. 1, FIG. 1 is a schematic diagram illustrating a wireless power supply system according to an embodiment of the disclosure. In this embodiment, the wireless power supply system 100 includes a power coil circuit 110, a relay coil circuit 120 and a receiving coil circuit 130. The power coil circuit 110 receives a main power PM and sends a wireless power WPM according to the main power PM. The relay coil circuit 120 receives the wireless power WPM and sends a relay power PRL according to the wireless power WPM. In this embodiment, the receiving coil circuit 130 receives the wireless power WPM and the relay power PRL and converts the wireless power WPM and the relay power PRL into a receiving power PS. Further, the relay coil circuit 120 includes a relay coil LI. The receiving coil circuit 130 includes a receiving coil LS. The relay coil LI and the receiving coil LS are not parallel to each other and do not overlap. Thus, the relay coil LI and the receiving coil LS increase the receiving range of the wireless power WPM.

It is worth mentioning here that the relay coil circuit 120 receives the wireless power WPM and sends a relay power PRL according to the wireless power WPM. The receiving coil circuit 130 receives the wireless power WPM and the relay power PRL and converts the wireless power WPM and the relay power PRL into a receiving power PS. The power of the receiving power PS may be compensated by the relay power PRL. As such, when the power coil circuit 110 is not precisely aligned with the receiving coil LS, the transmission efficiency of the wireless power supply of the wireless power supply system 100 may be increased.

In this embodiment, the power coil circuit 110 includes a power coil LP. The power coil LP sends the wireless power WPM.

In this embodiment, when the power coil LP is precisely aligned with the receiving coil LS, the receiving coil LS may receive the complete wireless power WPM. When the power coil LP is not precisely aligned with the receiving coil LS, the receiving coil LS may receive a portion of the wireless power WPM. It should be noted that when the power coil LP is not precisely aligned with the receiving coil LS, the relay coil LI may also receive a portion of the wireless power WPM. Thus, the power of the receiving power PS may be compensated by the relay power PRL.

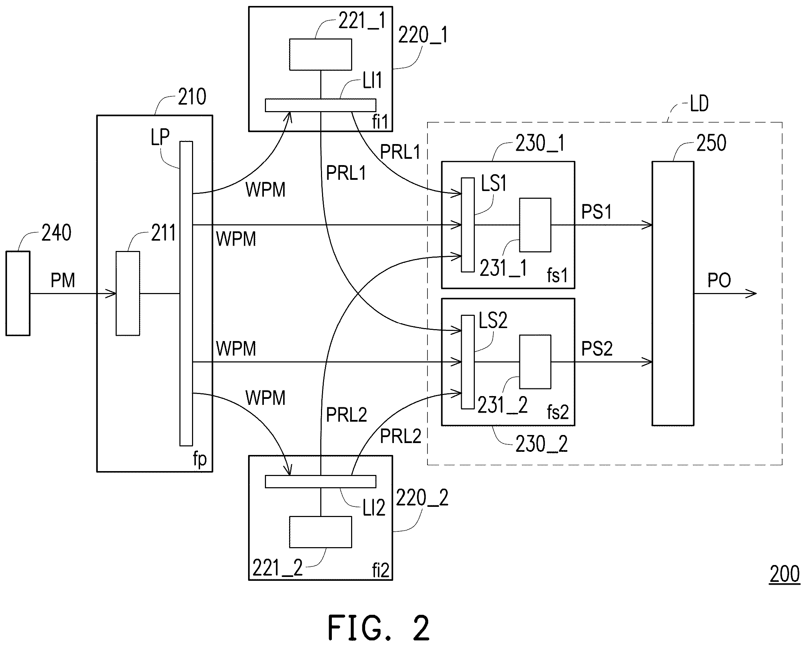

Refer to FIG. 2, FIG. 2 is a schematic diagram illustrating a wireless power supply system according to an embodiment of the disclosure. In this embodiment, the wireless power supply system 200 includes a power coil circuit 210, a relay coil circuit 220_1, a relay coil circuit 220_2, a receiving coil circuit 230_1, and a receiving coil circuit 230_2. The power coil circuit 210 includes a power coil LP and a power resonant circuit 211. The power coil LP sends the wireless power WPM. The power resonant circuit 211 is coupled to the power coil LP. The power resonant circuit 211 receives a main power PM and provides the main power PM to the power coil LP. The power resonant circuit 211 and the power coil LP determine a resonant frequency fp and an amplitude of the wireless power WPM.

In this embodiment, the relay coil circuit 220_1 includes a relay coil LI1 and a relay resonant circuit 221_1. The relay coil LI1 receives the wireless power WPM and sends a relay power PRL1. The relay resonant circuit 221_1 is connected to the relay coil LI1. The relay resonant circuit 221_1 and the relay coil LI1 determine a resonant frequency fi1 and an amplitude of the relay power PRL1.

In this embodiment, the relay coil circuit 220_2 includes a relay coil LI2 and a relay resonant circuit 221_2. The relay coil LI2 receives the wireless power WPM and sends a relay power PRL2. The relay resonant circuit 221_2 is connected to the relay coil LI2. The relay resonant circuit 221_2 and the relay coil LI2 determine a resonant frequency fi2 and an amplitude of the relay power PRL2.

In this embodiment, the receiving coil circuit 230_1 includes a receiving coil LS1 and a receiving resonant circuit 231_1. The receiving coil LS1 receives the relay power PRL1, the relay power PRL2, and the wireless power WPM. Thus, the power of the power received by the receiving coil LS1 is substantially equal to the sum of the power of the relay power PRL1 and the relay power PRL2 and the power of the wireless power WPM received by the receiving coil LS1. The receiving resonant circuit 231_1 is connected to the receiving coil LS1. The receiving resonant circuit 231_1 outputs a receiving power PS1. The receiving resonant circuit 231_1 and the receiving coil LS1 determine a resonant frequency fs1 and an amplitude of the receiving power PS1.

In this embodiment, the receiving coil circuit 230_2 includes a receiving coil LS2 and a receiving resonant circuit 231_2. The receiving coil LS2 receives the relay power PRL1, the relay power PRL2, and the wireless power WPM. Thus, the power of the power received by the receiving coil LS2 is substantially equal to the sum of the power of the relay power PRL1 and the relay power PRL2 and the power of the wireless power WPM received by the receiving coil LS2. The receiving resonant circuit 231_2 is connected to the receiving coil LS2. The receiving resonant circuit 231_2 outputs a receiving power PS2. The receiving resonant circuit 231_2 and the receiving coil LS2 determine a resonant frequency fs2 and an amplitude of the receiving power PS2. In this embodiment, the relay coil LI2 and the receiving coil LS2 are not parallel to each other and do not overlap.

In this embodiment, the resonant frequencies fp, fi1, fi2, fs1, and fs2 may be adjusted to be the same as the operating frequency. Further, at least one of the resonant frequencies fp, fi1, fi2, fs1, and fs2 may be adjusted to be different from the operating frequency. Thus, the amplitude of at least one of the wireless power WPM, the receiving power PS1, the receiving power PS2, the relay power PRL1, and the relay power PRL2 may be adjusted. In other words, the waveforms of the wireless power WPM, the receiving power PS1, the receiving power PS2, the relay power PRL1, and the relay power PRL2 may be adjusted according to actual situations.

In this embodiment, the wireless power supply system 200 further includes a power supply circuit 240. The power supply circuit 240 is connected to the power coil circuit 210. The power supply circuit 240 provides a main power PM according to an external power source. The power supply circuit 240 may be implemented by a power converter or an inverter well known to those skilled in the art.

In this embodiment, the wireless power supply system 200 further includes an output circuit 250. The output circuit 250 is connected to the receiving resonant circuit 231_1 and the receiving resonant circuit 231_2. The output circuit 250 receives the receiving power PS1 and the receiving power PS2 and generates an output power PO according to the receiving power PS1 and the receiving power PS2. The output power PO is provided to a load. For example, components of the load may be driven according to the output power PO. For example, the load may utilize the output power PO to charge a battery in the load. For example, the load may be an electric vehicle, but the disclosure is not limited thereto. The load may be an automated guided vehicle (AGV) or a rail guided vehicle (RGV), but the disclosure is not limited thereto.

In this embodiment, the output circuit 250, the receiving coil circuit 230_1, and the receiving coil circuit 230_2 are set on the load. The output circuit 250 supplies power to the load by utilizing the output power PO. In some embodiments, the relay coil circuit 220_1 and the relay coil circuit 220_2 are set on the load. In some embodiments, the relay coil circuit 220_1 and the relay coil circuit 220_2 are set outside the load.

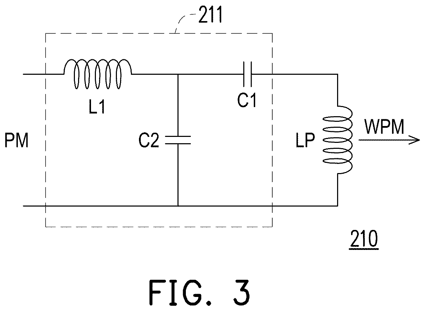

Referring to FIG. 2 and FIG. 3, FIG. 3 is a circuit schematic diagram of a power coil circuit according to an embodiment of the disclosure. In this embodiment, the power resonant circuit 211 includes an inductor L1, a capacitor C1, and a capacitor C2. A first end of the inductor L1 is connected to a first receiving end of the power resonant circuit 211. The capacitor C1 is connected between a second end of the inductor L1 and a first end of the power coil LP. A first end of the capacitor C2 is connected to the second end of the inductor L1. A second end of the capacitor C2 is connected to a second end of the power coil LP and a second receiving end of the power resonant circuit 211. The power resonant circuit 211 receives the main power PM by utilizing the first receiving end and the second receiving end. In this embodiment, the capacitor C1 and the capacitor C2 may respectively be variable capacitors. The capacitance values of the capacitor C1 and the capacitor C2 may be adjusted. The inductor L1 may be a variable inductor. The inductance value of the inductor L1 may be adjusted. Thus, the resonant frequency fp may be adjusted.

In some embodiments, the power resonant circuit 211 may be implemented by other inductor-capacitor (LC) networks or capacitor networks. The implementation of the power resonant circuit 211 of the disclosure is not limited to this embodiment.

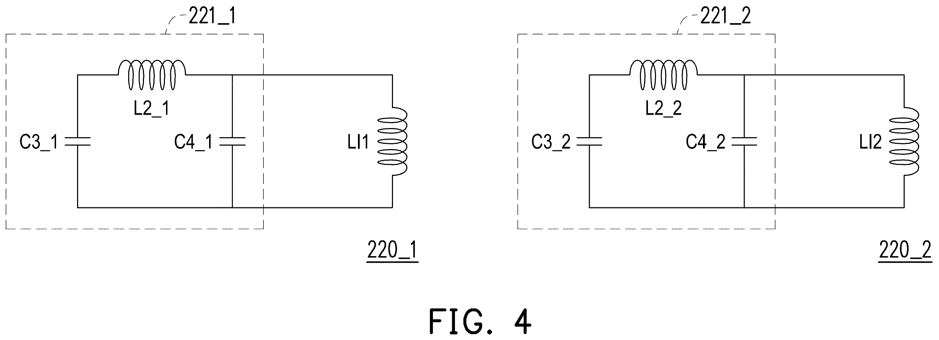

Referring to FIG. 2 and FIG. 4, FIG. 4 is a circuit schematic diagram of a relay coil circuit according to an embodiment of the disclosure. FIG. 4 illustrates the relay coil circuit 220_1 and the relay coil circuit 220_2. In this embodiment, the relay resonant circuit 221_1 includes an inductor L2_1, a capacitor C3_1, and a capacitor C4_1. The inductor L2_1 is connected between a first end of the capacitor C3_1 and a first end of the relay coil LI1. A first end of the capacitor C4_1 is connected to the first end of the relay coil LI1. A second end of the capacitor C4_1 is connected to a second end of the relay coil LI1 and a second end of the capacitor C3_1. In this embodiment, the capacitor C3_1 and the capacitor C4_1 may respectively be variable capacitors. The capacitance values of the capacitor C3_1 and the capacitor C4_1 may be adjusted. The inductor L2_1 may be a variable inductor. The inductance value of the inductor L2_1 may be adjusted. Thus, the resonant frequency fi1 may be adjusted.

In this embodiment, the relay resonant circuit 221_2 includes an inductor L2_2, a capacitor C3_2, and a capacitor C4_2. The inductor L2_2 is connected between a first end of the capacitor C3_2 and a first end of the relay coil LI2. A first end of the capacitor C4_2 is connected to the first end of the relay coil LI2. A second end of the capacitor C4_2 is connected to a second end of the relay coil LI2 and a second end of the capacitor C3_2. In this embodiment, the capacitor C3_2 and the capacitor C4_2 may respectively be variable capacitors. The capacitance values of the capacitor C3_2 and the capacitor C4_2 may be adjusted. The inductor L2_2 may be a variable inductor. The inductance value of the inductor L2_2 may be adjusted. Thus, the resonant frequency fi2 may be adjusted.

In some embodiments, the relay resonant circuit 221_1 and the relay resonant circuit 221_2 may respectively be implemented by other inductor-capacitor (LC) networks or capacitor networks. The implementation of the relay resonant circuit 221_1 and the relay resonant circuit 221_2 of the disclosure is not limited to this embodiment.

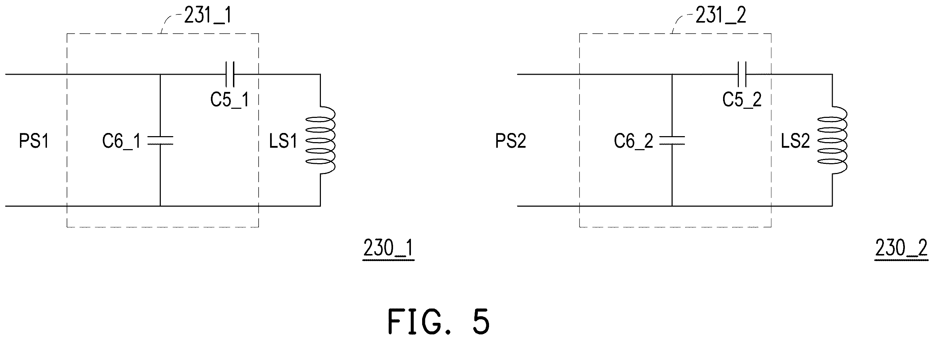

Referring to FIG. 2 and FIG. 5, FIG. 5 is a circuit schematic diagram of a receiving coil circuit according to an embodiment of the disclosure. FIG. 5 illustrates the receiving coil circuit 230_1 and the receiving coil circuit 230_2. In this embodiment, the receiving resonant circuit 231_1 includes a capacitor C5_1 and a capacitor C6_1. A first end of the capacitor C5_1 is connected to a first end of the receiving coil LS1. A second end of the capacitor C5_1 is connected to a first output end of the receiving resonant circuit 231_1. A first end of the capacitor C6_1 is connected to the first output end of the receiving resonant circuit 231_1. A second end of the capacitor C6_1 is connected to a second output end of the receiving resonant circuit 231_1 and a second end of the receiving coil LS1. In this embodiment, the capacitor C5_1 and the capacitor C6_1 may respectively be variable capacitors. The capacitance values of the capacitor C5_1 and the capacitor C6_1 may be adjusted. Thus, the resonant frequency fs1 may be adjusted. The receiving resonant circuit 231_1 outputs the receiving power PS1 using the first output end of the receiving resonant circuit 231_1 and the second output end of the receiving resonant circuit 231_1.

In this embodiment, the receiving resonant circuit 231_2 includes a capacitor C5_2 and a capacitor C6_2. A first end of the capacitor C5_2 is connected to a first end of the receiving coil LS2. A second end of the capacitor C5_2 is connected to a first output end of the receiving resonant circuit 231_2. A first end of the capacitor C6_2 is connected to the first output end of the receiving resonant circuit 231_2. A second end of the capacitor C6_2 is connected to a second output end of the receiving resonant circuit 231_2 and a second end of the receiving coil LS2. In this embodiment, the capacitor C5_2 and the capacitor C6_2 may respectively be variable capacitors. The capacitance values of the capacitor C5_2 and the capacitor C6_2 may be adjusted. Thus, the resonant frequency fs2 may be adjusted. The receiving resonant circuit 231_2 outputs the receiving power PS2 using the first output end of the receiving resonant circuit 231_2 and the second output end of the receiving resonant circuit 231_2.

In some embodiments, the receiving resonant circuit 231_1 and the receiving resonant circuit 231_2 may respectively be implemented by other inductor-capacitor (LC) networks or capacitor networks. The implementation of the receiving resonant circuit 231_1 and the receiving resonant circuit 231_2 of the disclosure is not limited to this embodiment.

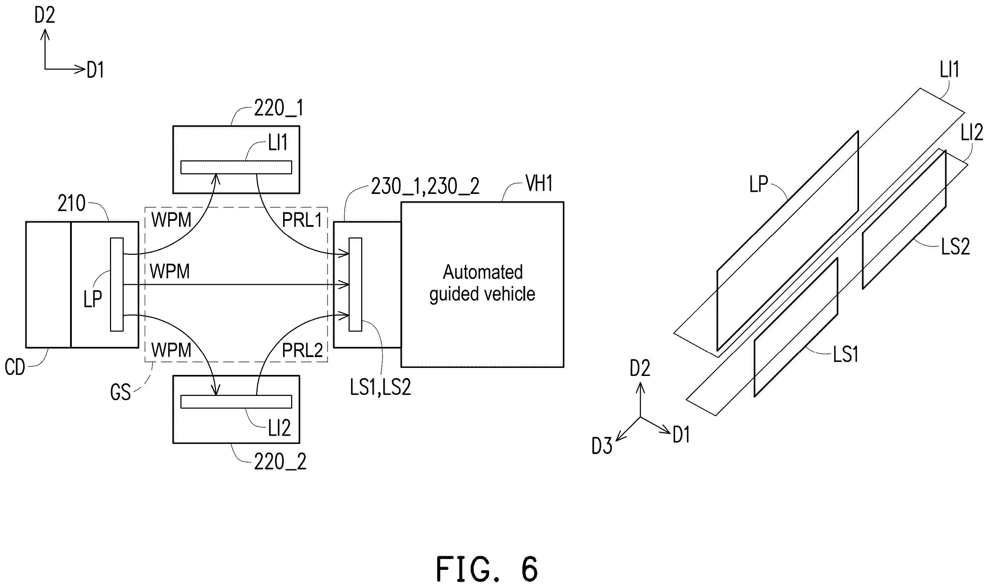

Referring to FIG. 2 and FIG. 6, FIG. 6 is a schematic diagram illustrating an application of a wireless power supply system according to an embodiment of the disclosure. In this embodiment, the wireless power supply system 200 may be applied to, for example, an automated guided vehicle VH1 (i.e., a load). The output circuit 250 and the receiving coil circuit 230_1 and the receiving coil circuit 230_2 are set on the automated guided vehicle VH1. The relay coil circuit 220_1 and the relay coil circuit 220_2 are set outside the automated guided vehicle VH1. The power coil circuit 210 is set on the power supply unit CD. FIG. 6 also illustrates the spatial structural relationship of the power coil LP, the relay coil LI1, the relay coil LI2, the receiving coil LS1, and the receiving coil LS2. When the automated guided vehicle VH1 approaches the power coil LP, a gap space GS exists between the receiving coil LS1, the receiving coil LS2, and the power coil LP. The power coil circuit 210 provides the wireless power WPM to the gap space GS.

The relay coil LI1 is set above the gap space GS. The relay coil LI2 is set below the gap space GS. Thus, on a plane of a direction D1 and a direction D2, the power coil LP, the relay coil LI1, the relay coil LI2, the receiving coil LS1, and the receiving coil LS2 are located around the gap space GS. Thus, the relay coil circuit 220_1, the relay coil circuit 220_2, the receiving coil circuit 230_1, and the receiving coil circuit 230_2 may ensure that most of the wireless power WPM is received.

In this embodiment, the power coil LP, the relay coil LI1, the relay coil LI2, the receiving coil LS1, and the receiving coil LS2 are respectively planar coils. The power coil LP, the receiving coil LS1, and the receiving coil LS2 respectively extend at least along the plane of the direction D2 and a direction D3. The relay coil LI1 and the relay coil LI2 respectively extend at least along the plane of the direction D1 and the direction D3. In this embodiment, the relay coil LI2 and the relay coil LI1 are parallel to each other. The relay coil LI2 is perpendicular to the receiving coil LS1 and the receiving coil LS2. In this embodiment, the angle between the receiving coil LS1 and the relay coil LI1 is approximately equal to 90°. The angle between the receiving coil LS2 and the relay coil LI2 is approximately equal to 90°. However, the disclosure is not limited thereto. The angle between the receiving coil LS1 and the relay coil LI1 may be less than or equal to 105°. The angle between the receiving coil LS2 and the relay coil LI2 may be less than or equal to 105°. The positions of the power coil LP, the relay coil LI1, the relay coil LI2, the receiving coil LS1, and the receiving coil LS2 may allow offset and skew. As long as the power coil LP, the relay coil LI1, the relay coil LI2, the receiving coil LS1, and the receiving coil LS2 are located around the gap space GS, the relay coil circuit 220_1, the relay coil circuit 220_2, the receiving coil circuit 230_1, and the receiving coil circuit 230_2 may still ensure that most of the wireless power WPM is received.

In this embodiment, the receiving coil LS1 and the receiving coil LS2 are arranged at least along the direction D3. In some embodiments, the receiving coil LS1 and the receiving coil LS2 are arranged at least along the direction D2.

In some embodiments, the wireless power supply system 200 may include two magnetic structures (not shown). The relay coil LI1 and the receiving coil LS1 respectively surround the same magnetic structure. The relay coil LI2 and the receiving coil LS2 respectively surround another magnetic structure. Thus, the inductive coupling between the receiving coil LS1 and the relay coil LI1 may be enhanced. The inductive coupling between the receiving coil LS2 and the relay coil LI2 may be enhanced. For example, the two magnetic structures may respectively be iron cores.

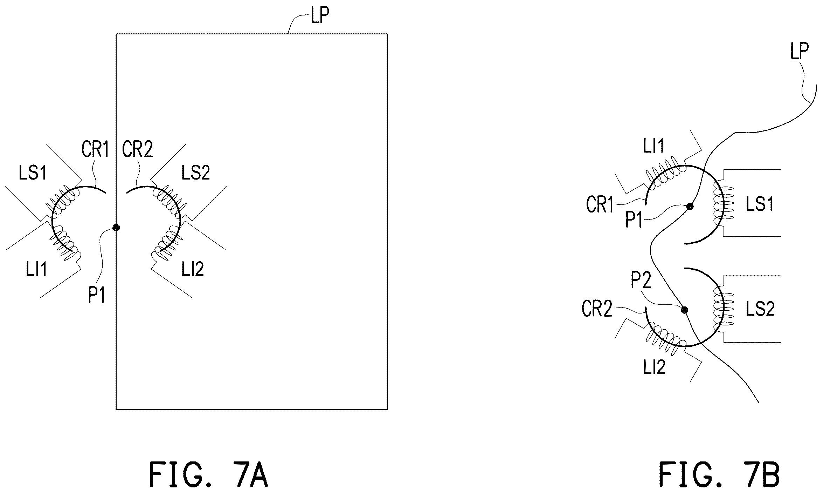

Referring to FIG. 2 and FIG. 7A, FIG. 7A is a schematic diagram illustrating an application of a wireless power supply system according to an embodiment of the disclosure. In this embodiment, the wireless power supply system 200 may be applied to, for example, a rail guided vehicle (i.e., a load). The power coil LP may be set along the rail. The wireless power supply system 200 may include a magnetic structure CR1 and a magnetic structure CR2. In this embodiment, the magnetic structure CR1 and the magnetic structure CR2 may respectively be C-type iron cores. The magnetic structure CR1 and the magnetic structure CR2 straddle any same coil position P1 of the power coil LP to jointly form a common coupling structure. The relay coil LI1 and the receiving coil LS1 respectively surround the magnetic structure CR1. The relay coil LI2 and the receiving coil LS2 respectively surround the magnetic structure CR2. The magnetic flux corresponding to the wireless power WPM is confined in the magnetic structure CR1 and the magnetic structure CR2. Thus, the relay coil circuit 220_1, the relay coil circuit 220_2, the receiving coil circuit 230_1, and the receiving coil circuit 230_2 may still ensure receiving most of the wireless power WPM. Further, the inductive coupling between the receiving coil LS1 and the relay coil LI1 may be enhanced. The inductive coupling between the receiving coil LS2 and the relay coil LI2 may be enhanced.

In this embodiment, the relay coil circuit 220_1, the relay coil circuit 220_2, the receiving coil circuit 230_1, the receiving coil circuit 230_2, and the output circuit 250 are set on the rail guided vehicle. The angle between the receiving coil LS1 and the relay coil LI1 may be less than or equal to 105°. The angle between the receiving coil LS2 and the relay coil LI2 may be less than or equal to 105°. The positions of the power coil LP, the relay coil LI1, the relay coil LI2, the receiving coil LS1, and the receiving coil LS2 may allow offset and skew. As long as the magnetic structure CR1 and the magnetic structure CR2 straddle the power coil LP, the relay coil circuit 220_1, the relay coil circuit 220_2, the receiving coil circuit 230_1, and the receiving coil circuit 230_2 may still ensure receiving most of the wireless power WPM.

Referring to FIG. 2 and FIG. 7B, FIG. 7B is a schematic diagram illustrating an application of a wireless power supply system according to an embodiment of the disclosure. In this embodiment, the wireless power supply system 200 may be applied to, for example, a rail guided vehicle (i.e., a load). Different from FIG. 7A, the magnetic structure CR1 and the magnetic structure CR2 respectively straddle different coil position P1 and coil position P2 of the power coil LP. For example, the magnetic structure CR1 straddles the coil position P1. The magnetic structure CR2 straddles the coil position P2. Thus, as long as at least one of the magnetic structure CR1 and the magnetic structure CR2 straddles the power coil LP, the relay coil circuit 220_1, the relay coil circuit 220_2, the receiving coil circuit 230_1, and the receiving coil circuit 230_2 may still ensure receiving most of the wireless power WPM.

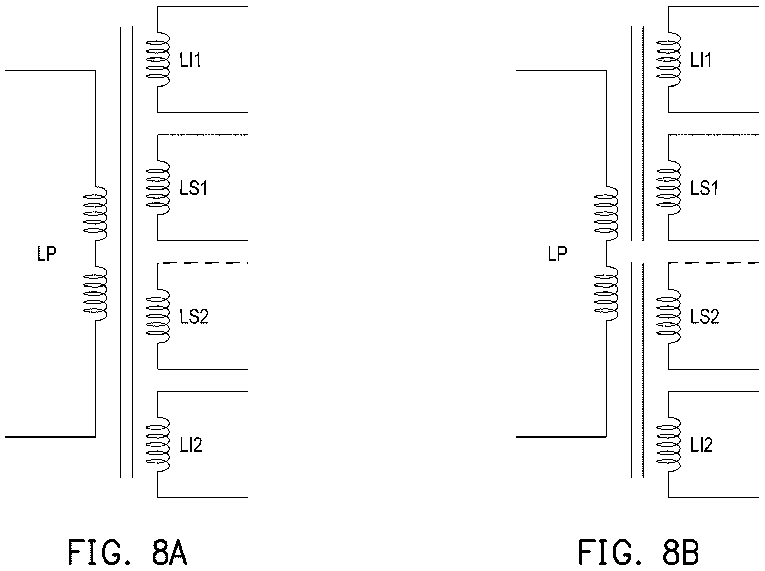

Referring to FIG. 2, FIG. 6 and FIG. 8A, FIG. 8A is an equivalent schematic diagram of a wireless power supply system according to an embodiment of the disclosure. In the application of the automated guided vehicle VH1, the power coil LP, the relay coil LI1, the relay coil LI2, the receiving coil LS1, and the receiving coil LS2 may constitute mutual coupling and mutual inductance relationships with each other. Thus, in the case where at least one of the resonant frequencies fi1, fi2 is adjusted, the voltage values of the receiving power PS1 and the receiving power PS2 are adjusted. Thus, the voltage value of the output power PO is also adjusted. In other words, the voltage value of the output power PO may be increased or decreased according to the change of at least one of the resonant frequencies fi1, fi2.

Referring to FIG. 2, FIG. 7 and FIG. 8B, FIG. 8B is an equivalent schematic diagram of a wireless power supply system according to an embodiment of the disclosure. In the application of the rail guided vehicle, the power coil LP, the relay coil LI1, and the receiving coil LS1 may constitute a first mutual coupling and mutual inductance relationship with each other. The power coil LP, the relay coil LI2, and the receiving coil LS2 may constitute a second mutual coupling and mutual inductance relationship with each other. Thus, in the case where the resonant frequency fi1 is adjusted, the voltage value of the receiving power PS1 is adjusted. In the case where the resonant frequency fi2 is adjusted, the voltage value of the receiving power PS2 is adjusted.

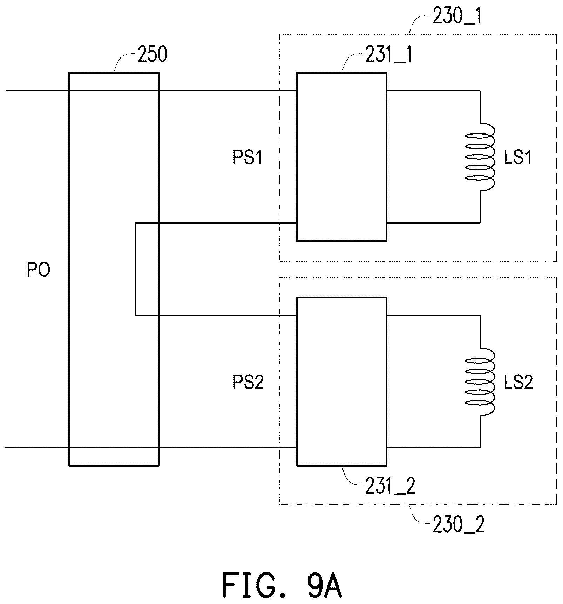

Referring to FIG. 2 and FIG. 9A, FIG. 9A is a schematic diagram of a receiving coil circuit and an output circuit according to an embodiment of the disclosure. In this embodiment, a first output end of the output circuit 250 is connected to a first output end of the receiving coil circuit 230_1. A second output end of the output circuit 250 is connected to a first output end of the receiving coil circuit 230_2. The output circuit 250 connects a second output end of the receiving coil circuit 230_1 to the first output end of the receiving coil circuit 230_2. Thus, the receiving coil circuit 230_1 and the receiving coil circuit 230_2 are connected in series with each other. The voltage value of the output power PO is equal to the sum of the voltage value of the receiving power PS1 and the voltage value of the receiving power PS2.

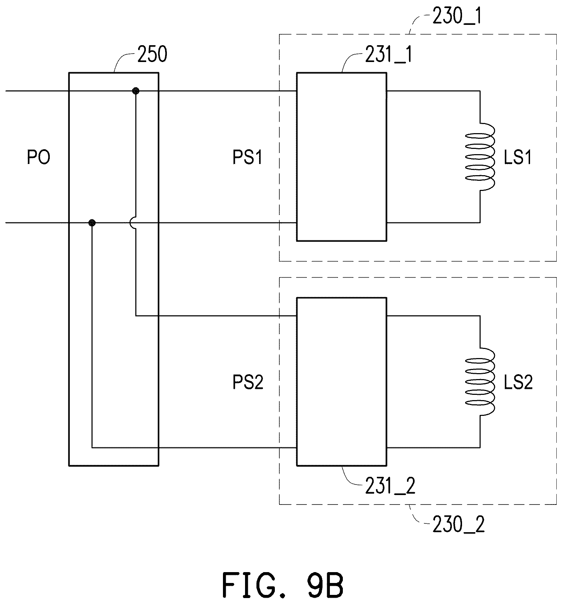

Referring to FIG. 2 and FIG. 9B, FIG. 9B is a schematic diagram of a receiving coil circuit and an output circuit according to an embodiment of the disclosure. In this embodiment, a first output end of the output circuit 250 is connected to a first output end of the receiving coil circuit 230_1 and the first output end of the receiving coil circuit 230_2. The second output end of the output circuit 250 is connected to the second output end of the receiving coil circuit 230_1 and the first output end of the receiving coil circuit 230_2. Thus, the receiving coil circuit 230_1 and the receiving coil circuit 230_2 are connected in parallel with each other. The voltage value of the output power PO is equal to the voltage value of the receiving power PS1 and the voltage value of the receiving power PS2.

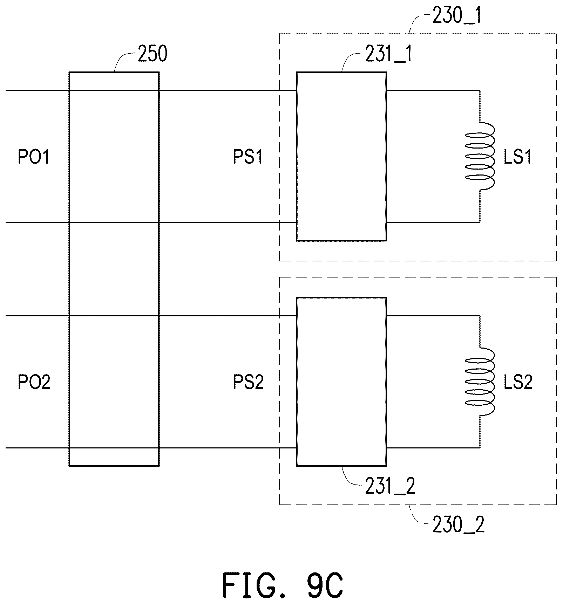

Referring to FIG. 2 and FIG. 9C, FIG. 9C is a schematic diagram of a receiving coil circuit and an output circuit according to an embodiment of the disclosure. In this embodiment, the output circuit 250 may generate an output power PO1 according to the receiving power PS1 output by the receiving coil circuit 230_1. The output circuit 250 may generate an output power PO2 according to the receiving power PS2 output by the receiving coil circuit 230_2. For example, the voltage value of the output power PO1 is substantially the same as the voltage value of the receiving power PS1. The voltage value of the output power PO2 is substantially the same as the voltage value of the receiving power PS2.

In this embodiment, the output circuit 250 may change the connection relationship among the first output end of the receiving coil circuit 230_1, the second output end of the receiving coil circuit 230_1, the first output end of the receiving coil circuit 230_2, and the second output end of the receiving coil circuit 230_2, thereby changing the output mode. For example, the output circuit 250 may change the connection relationship among the first output end of the receiving coil circuit 230_1, the second output end of the receiving coil circuit 230_1, the first output end of the receiving coil circuit 230_2, and the second output end of the receiving coil circuit 230_2 via a switch network or a path selection circuit.

In summary, the relay coil circuit receives the wireless power and sends the relay power according to the wireless power. The receiving coil circuit receives the wireless power and the relay power and converts the wireless power and the relay power into a receiving power. The power of the receiving power may be compensated by the relay power. As such, when the power coil circuit is not precisely aligned with the receiving coil, the transmission efficiency of the wireless power supply of the wireless power supply system may be increased. Further, the relay coil and the receiving coil are not parallel to each other and do not overlap. Thus, the relay coil and the receiving coil increase the receiving range of the wireless power.

## Claims

1. A wireless power supply system (100, 200), comprising:
a power coil circuit (110, 210), configured to receive a main power (PM) and send a wireless power (WPM) according to the main power (PM);
a first relay coil circuit (120, 220_1, 220_2), configured to receive the wireless power (WPM) and send a first relay power (PRL, PRL1, PRL2) according to the wireless power (WPM); and
a first receiving coil circuit (130, 230_1, 230_2), configured to receive the wireless power (WPM) and the first relay power (PRL, PRL1, PRL2) and convert the wireless power (WPM) and the first relay power (PRL, PRL1, PRL2) into a first receiving power (PS, PS1, PS2),
wherein the first relay coil circuit (120, 220_1, 220_2) comprises a first relay coil (LI, LI1, LI2), the first receiving coil circuit (130, 230_1, 230_2) comprises a first receiving coil (LS, LS1, LS2), and the first relay coil (LI, LI1, LI2) and the first receiving coil (LS, LS1, LS2) are not parallel to each other and do not overlap.

2. The wireless power supply system (100, 200) according to claim 1, wherein the first relay coil circuit (120, 220_1, 220_2) further comprises:
a first relay resonant circuit (221_1, 221_2), connected to the first relay coil (LI, LI1, LI2) and configured to determine a resonant frequency (fp, fi1, fi2, fs1, fs2) and an amplitude of the relay power (PRL, PRL1, PRL2) with the first relay coil (LI, LI1, LI2).

3. The wireless power supply system (100, 200) according to claim 1, wherein the first receiving coil circuit (130, 230_1, 230_2) further comprises:
a first receiving resonant circuit (231_1, 231_2), connected to the first receiving coil (LS, LS1, LS2) and configured to determine a resonant frequency (fp, fi1, fi2, fs1, fs2) and an amplitude of the first receiving power (PS, PS1, PS2) with the first receiving coil (LS, LS1, LS2).

4. The wireless power supply system (100, 200) according to claim 3, further comprising:
a second relay coil circuit (120, 220_1, 220_2), configured to receive the wireless power (WPM) and send a second relay power (PRL, PRL1, PRL2) according to the wireless power (WPM); and
a second receiving coil circuit (130, 230_1, 230_2), configured to receive the wireless power (WPM) and the relay power (PRL, PRL1, PRL2) and convert the wireless power (WPM) and the second relay power (PRL, PRL1, PRL2) into a second receiving power (PS, PS1, PS2).

5. The wireless power supply system (100, 200) according to claim 4, wherein:
the second relay coil circuit (120, 220_1, 220_2) comprises a second relay coil (LI, LI1, LI2),
the second receiving coil circuit (130, 230_1, 230_2) comprises a second receiving coil (LS, LS1, LS2), and
the second relay coil (LI, LI1, LI2) and the second receiving coil (LS, LS1, LS2) are not parallel to each other and do not overlap.

6. The wireless power supply system (100, 200) according to claim 5, further comprising:
a first magnetic structure (CR1, CR2),
wherein the first relay coil (LI, LI1, LI2) and the first receiving coil (LS, LS1, LS2) respectively surround the first magnetic structure (CR1, CR2).

7. The wireless power supply system (100, 200) according to claim 6, further comprising:
a second magnetic structure (CR1, CR2),
wherein the second relay coil (LI, LI1, LI2) and the second receiving coil (LS, LS1, LS2) respectively surround the second magnetic structure (CR1, CR2).

8. The wireless power supply system (100, 200) according to claim 5, wherein the second relay coil circuit (120, 220_1, 220_2) further comprises:
a second relay resonant circuit (221_1, 221_2), connected to the second relay coil (LI, LI1, LI2) and configured to determine a resonant frequency (fp, fi1, fi2, fs1, fs2) and an amplitude of the second relay power (PRL, PRL1, PRL2) with the second relay coil (LI, LI1, LI2).

9. The wireless power supply system (100, 200) according to claim 5, wherein:
the second relay coil (LI, LI1, LI2) and the first relay coil (LI, LI1, LI2) are parallel to each other, and
the second relay coil (LI, LI1, LI2) is perpendicular to the first receiving coil (LS, LS1, LS2) and the second receiving coil (LS, LS1, LS2).

10. The wireless power supply system (100, 200) according to claim 5, wherein:
an angle between the first receiving coil (LS, LS1, LS2) and the first relay coil (LI, LI1, LI2) is less than or equal to 105°, and
the angle between the second receiving coil (LS, LS1, LS2) and the second relay coil (LI, LI1, LI2) is less than or equal to 105°.

11. The wireless power supply system (100, 200) according to claim 5, wherein the second receiving coil circuit (130, 230_1, 230_2) further comprises:
a second receiving resonant circuit (231_1, 231_2), connected to the second receiving coil (LS, LS1, LS2) and configured to determine a resonant frequency (fp, fi1, fi2, fs1, fs2) and an amplitude of the second receiving power (PS, PS1, PS2) with the second receiving coil (LS, LS1, LS2).

12. The wireless power supply system (100, 200) according to claim 11, further comprising:
an output circuit (250), connected to the first receiving resonant circuit (231_1, 231_2) and the second receiving resonant circuit (231_1, 231_2) and configured to receive the first receiving power (PS, PS1, PS2) and the second receiving power (PS, PS1, PS2) and generate at least one output power (PO) according to the first receiving power (PS, PS1, PS2) and the second receiving power (PS, PS1, PS2).

13. The wireless power supply system (100, 200) according to claim 12, wherein a voltage value of the at least one output power (PO) is equal to a sum of a voltage value of the first receiving power (PS, PS1, PS2) and a voltage value of the second receiving power (PS, PS1, PS2).

14. The wireless power supply system (100, 200) according to claim 12, wherein:
the at least one output power (PO) comprises a first output power (PO) and a second output power (PO),
the output circuit (250) generates the first output power (PO) according to a voltage value of the first receiving power (PS, PS1, PS2) and generates the second output power (PO) according to a voltage value of the second receiving power (PS, PS1, PS2).

15. The wireless power supply system (100, 200) according to claim 12, wherein:
the output circuit (250), the first receiving coil circuit (130, 230_1, 230_2), and the second receiving coil circuit (130, 230_1, 230_2) are respectively set on a load, and
the output circuit (250) supplies power to the load with the at least one output power (PO).
